# EUROPÄISCHE PATENTSCHRIFT

(11) **EP 1 608 208 B1**
(45) Veröffentlichungstag und Bekanntmachung des Hinweises auf die Patenterteilung: **14.05.2008**
(21) Anmeldenummer: 05010914.9
(22) Anmeldetag: 19.05.2005
(51) Int. Cl.: H05B 41/285

(54) **Schaltung mit Abschalteinrichtung zum Betrieb von Lichtquellen**
Circuit with shut-down device for operating light sources
Circuit avec dispositif de coupure pour alimenter des sources lumineuses

(30) Priorität: 15.06.2004 DE 102004028798
(43) Veröffentlichungstag der Anmeldung: 21.12.2005
(73) Patentinhaber: Patent-Treuhand-Gesellschaft für elektrische Glühlampen mbH, 81543 München (DE)
(72) Erfinder: Faccin, Marco, 31031 Caerano (IT); Franck, Felix, Dr., 80333 München (DE); Menegazzi, Michele, 31038 Paese (IT)
(74) Vertreter: Raiser, Franz

(56) Entgegenhaltungen:
- EP-A- 0 668 647
- US-A1- 2002 071 299

## Beschreibung

### Technisches Gebiet

Die Erfindung betrifft eine Schaltung mit Abschalteinrichtung zum Betrieb von Lichtquellen. Insbesondere betrifft die Erfindung Halbbrücken-Wechselrichter zum Betrieb von Halogenglühlampen.

### Stand der Technik

Zum Betrieb von Lichtquellen sind Halbbrücken-Wechselrichter allgemein bekannt. Der Halbbrücken-Wechselrichter wird von einer Versorgungsspannung gespeist, die eine Gleichspannung ist. Für Lichtquellen deren Lichtstrom nur träge der bereitgestellten elektrischen Energie folgt, kann die Gleichspannung gepulst sein, ohne die Qualität des Lichts zu beeinträchtigen. Halogenglühlampen stellen eine solche Lichtquelle dar. Halbbrücken-Wechselrichter für Halogenglühlampen werden deshalb im allgemeinen von einer gleichgerichteten Netzspannung als Versorgungsspannung gespeist, wobei keine Glättung vorgesehen ist.

Weiterhin ist allgemein bekannt, dass Halbbrücken-Wechselrichter für Halogenglühlampen aus Kostengründen als selbstschwingende Wechselrichter ausgeführt werden. Selbstschwingend bedeutet in diesem Zusammenhang, dass einem Ausgangskreis ein Ansteuersignal für elektronischen Schalter der Halbbrücke entnommen wird. Im folgenden wird unter einem Halbbrücken-Wechselrichter immer ein selbstschwingender Halbbrücken-Wechselrichter verstanden. Er besteht im wesentlichen aus der Serienschaltung eines oberen und eines unteren elektronischen Schalter, die in einem Halbbrücken-Mittelpunkt verbunden sind und zwischen die Versorgungsspannung und ein Massepotenzial geschaltet sind.

Die Schwingung des Halbbrücken-Wechselrichters muss durch eine Startschaltung gestartet werden. Dies ist nach jeder Netzhalbwelle nötig, da die Schwingung bei niedriger momentaner Netzspannung abreißt. Die Startschaltung besteht im wesentlichen aus einem Start-Kondensator und einem Triggerelement. Sobald die Spannung am Start-Kondensator eine Triggerschwelle überschreitet, wird ein Startimpuls ausgelöst; dies bedeutet, dass das Triggerelement den Start-Kondensator auf die Steuerelektrode des unteren elektronischen Schalters schaltet. Damit wird der untere elektronische Schalter eingeschaltet und die Schwingung des Halbbrücken-Wechselrichters setzt ein. Der Start-Kondensator muss dafür soviel Energie liefern, damit der untere elektronische Schalter sicher und lange genug eingeschaltet bleibt.

Damit im Fehlerfall die Schaltung nicht zerstört wird und auch durch eine fehlerhafte Last kein Schaden entsteht, enthalten die in Rede stehenden Schaltungen eine Abschalteinrichtung. Die Abschalteinrichtung besitzt einen Eingang und einen Ausgang. Sie ist so ausgelegt und geschaltet, dass sie den Start-Kondensator entlädt, falls am Eingang ein Abschaltsignal anliegt. Die Schwingung des Halbbrücken-Wechselrichters reißt beim nächsten Netzspannungs-Nulldurchgang ab. Die Abschalteinrichtung verhindert eine erneuten Start.

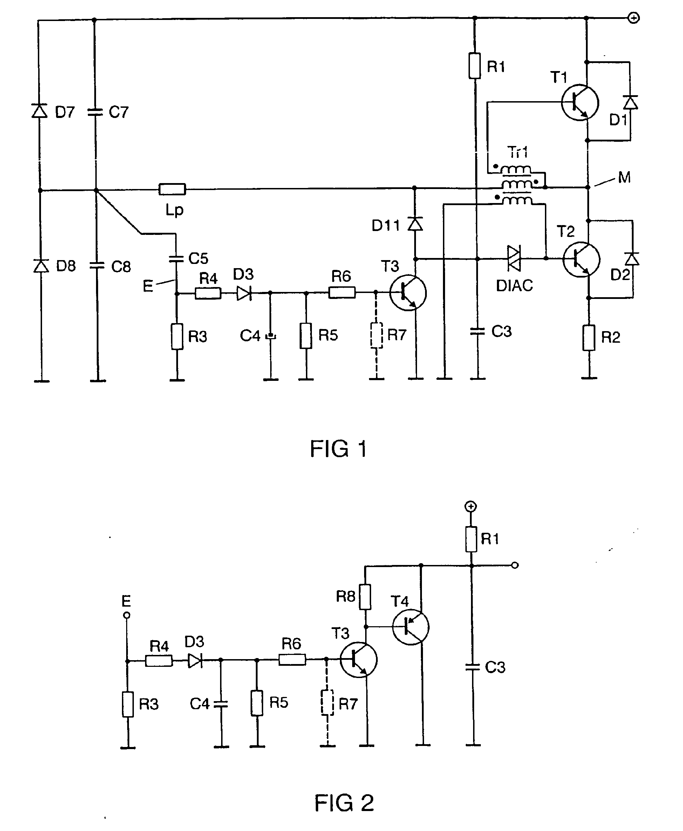

Der Stand der Technik für eine Schaltung mit Abschalteinrichtung zum Betrieb von Lichtquellen wird im folgenden anhand von Figur 1 erläutert. Zwischen einem Anschluss für eine Versorgungsspannung, der mit einem + Zeichen gekennzeichnet ist, und einem Massepotenzial ist die Serienschaltung eines oberen elektronischen Schalters T1 und eines unteren elektronischen Schalters T2 geschaltet. Der Verbindungsknoten M bildet einen Halbbrücken-Mittelpunkt. Die elektronischen Schalter sind als NPN-Bipolartransistoren dargestellt. Es können jedoch auch andere elektronische Schalter wie z. B. MOSFET oder IGBT verwendet werden. Parallel zu jedem elektronischen Schalter ist jeweils eine optionale Freilaufdiode eingezeichnet.

Parallel zur Serienschaltung von T1 und T2 ist die Serienschaltung von zwei Koppel-Kondensatoren C7 und C8 geschaltet. Am Verbindungspunkt zwischen C7 und C8 entsteht ein zweiter Knoten N2. Zwischen zweiten Knoten N2 und dem Halbbrücken-Mittelpunkt M liefert der Halbbrücken-Wechselrichter, der im wesentlichen aus T1, T2, C7 und C8 besteht eine gegenüber einer Netzspannung hochfrequente Wechselspannung. An diese Wechselspannung ist die Serienschaltung der Primärwicklung eines Rückkoppel-Transformators Tr1 und einer Last Lp geschaltet. Ein Koppel-Kondensator C7 oder C8 kann entfallen.

Die Last ist durch einen Widerstand mit der Bezeichnung Lp dargestellt. Die Last kann im einfachsten Fall nur aus einer Glühlampe bestehen. Es können aber auch Niedervolt-Halogen-Glühlampen über einen Transformator angeschlossen werden.

Der Rückkoppel-Transformators Tr1 erfasst mit der Primärwicklung einen Laststrom und koppelt ihn über zwei Sekundärwicklungen jeweils an Steuerelektroden von T1 und T2. Dadurch wird ein Rückkoppel-Kreis geschlossen, wodurch ein selbstschwingender Halbbrücken-Wechselrichter entsteht.

Eine Startschaltung wird durch einen Start-Kondensator C3, einen Widerstand R1 und ein Triggerelement DIAC gebildet. C3 und R1 sind in Serie zwischen die Versorgungsspannung und das Massepotenzial geschaltet. Der DIAC verbindet den Verbindungspunkt von C3 und R1 mit der Steuerelektrode des unteren elektronischen Schalters T2. Über R1 wird C3 von der Versorgungsspannung aufgeladen. Erreicht die Spannung einen Wert, der über der Schwellspannung des DIAC von typisch 33V liegt, so gibt C3 einen Startimpuls auf die Steuerelektrode von T2.

Schwingt der Halbbrücken-Wechselrichter, so muss Sorge dafür getragen werden, dass weitere Startimpulse durch die Startschaltung unterbleiben, da dadurch die laufende Schwingung gestört wird. Ein Startimpuls während der obere elektronische Schalter eingeschaltet ist führt sogar zur Zerstörung der Halbbrücke, da ein sog. Querstrom ausgelöst wird. Im Stand der Technik nach Figur 1 wird dieses Problem durch eine Diode D11 gelöst, die den Startkondensator C3 mit dem Halbbrücken-Mittelpunkt M verbindet. Sobald der untere elektronische Schalter einschaltet, entlädt sich der Start-Kondensator C3 über die Diode D11. Weitere Startimpulse werden dadurch vermieden.

Zwischen die Versorgungsspannung (+) und das Massepotenzial ist die Serienschaltung einer ersten und einer zweiten Begrenzer-Diode D7 und D8 geschaltet, wobei die Begrenzer-Dioden an einem dritten Knoten (N3) verbunden sind. Der dritte Knoten N3 ist mit dem zweiten Knoten N2 verbunden. Die Begrenzer-Dioden sollen verhindern, dass bei überhöhtem Laststrom die Spannung an den Koppel-Kondensatoren C7 und C8 die Polarität wechselt und somit das Potenzial am zweiten Knoten N2 nicht über die Versorgungsspannung und nicht unter dem Massepotenzial zu liegen kommt.

Eine Abschalteinrichtung besteht im Stand der Technik nach Figur 1 aus Widerständen R3-R6, einem Kondensator C4, einer Diode D3 und einem Transistor T3. Als ein Abschaltsignal dient die Spannung am zweiten Knoten N2. Die Amplitude des Wechselspannungs-Anteils der Spannung am zweiten Knoten N2 ist ein Maß für den Laststrom. Überschreitet der Laststrom ein einen vorgegebenen Grenzwert, so soll die Schaltung außer Betrieb gesetzt werden.

Die Spannung am zweiten Knoten N2 ist über einen fünften Kondensator C5 einem Eingang E der Abschaltvorrichtung verbunden. Der Wechselspannungs-Anteil der Spannung an N2 wird durch C5 herausgefiltert und an einem massebezogenen dritten Widerstand R3 zur Verfügung stellt. Die Spannung an R3 wird durch eine dritte Diode D3 gleichgerichtet und lädt über einen vierten Widerstand R4 einen vierten Kondensator C4.

R4 und C4 bilden einen Tiefpass. Er dient dazu, dass ein überhöhter Laststrom erst nach einer vorgegebenen Zeit zu einem Abschaltvorgang führt. Dies ist nötig, da kalte Wendeln einer Glühlampe beim Einschalten prinzipbedingt zu einem überhöhten Laststrom führen. Halogen-Glühlampen nehmen typischerweise erst ca. 0,1 sec nach dem Einschalten ihren Nominalwert an.

Parallel zu C4 ist ein fünfter Widerstand R5 geschaltet, der C4 nach einem überhöhten Laststrom wieder entlädt. Über einen Spannungsteiler aus den Widerständen R6 und R7 wird die Spannung an C4 der Basis des Transistors T3 zugeführt. Aus Kostengründen ist T3 im allgemeinen als Bipolartransistor ausgeführt. Wird T3 im Fehlerfall angesteuert, so schließt er über seine Kollektor-Emitterstrecke den Start-Kondensator C3 kurz. Der Spannungsteiler aus R6 und R7 passt das Spannungsniveau an C4 an die Einschaltschwelle von T3 an. Gegebenenfalls kann R7 entfallen.

In Figur 1 ist dargestellt, wie ein Abschaltsignal aus dem Knoten N2 zwischen den Koppel-Kondensatoren C7 und C8 entnommen wird. Alternativ kann auch der Strom im unteren elektronischen Schalter T2 als Abschaltsignal dienen. Dazu ist in Serie zum unteren elektronischen Schalter T2 ein Messwiderstand R2 geschaltet. Die Spannung an R2 wird dem Eingang E der Abschaltvorrichtung zugeführt. C5 kann entfallen.

Ein Problem bei der Schaltung nach dem Stand der Technik ist die Dimensionierung des Tiefpasses bestehend aus R4 und C4. Um die nötige Verzögerung zu erreichen und genügend Energie zur Ansteuerung des Transistors T3 zur Verfügung zu stellen, hat der Kondensator C4 im Stand der Technik typisch Werte von 10 bis 47 Mikrofarad. Diese Werte führen dazu, dass C4 im Vergleich zu anderen Bauteilen der Schaltung groß und teuer ist. Außerdem werden für diese Kapazitätswerte in der Regel Elektrolyt-Kondensatoren angeboten, die altern, nur in einem eingeschränkten Temperaturbereich arbeiten und bei der Bestückung in einer Massenproduktion aufwändig sind.

Aus der Schrift EP 0668647 A1 (Spechtenhauser) ist ein elektronischer Transformator mit einem Halbrücken-Wechselrichter bekannt. Der Halbrücken-Wechselrichter wird über einen Rückkoppel-Übertrager rückgekoppelt. An einer Zusatzwicklung des Rückkoppel-Übertragers wird ein Signal gewonnen, das einer Schaltung mit zwei Bipolar-Transistoren zugeführt, die als Thyristornachbildung bekannt ist. Bei Überlast oder bei Übertemperatur wird die Thyristornachbildung durch das Signal von der Zusatzwicklung getriggert und schaltet den elektronischen Transformator dauerhaft ab.

Aus der Schrift US 2002/0071299 A1 (Franck) ist ebenfalls ein elektronischer Transformator mit einem Halbrücken-Wechselrichter bekannt, der über einen Rückkoppel-Übertrager rückgekoppelt. An einer Zusatzwicklung des Rückkoppel-Übertragers wird ein Signal gewonnen, das einen weiteren Schalter ansteuert und damit einen Startkondensator entlädt.

### Darstellung der Erfindung

Es ist Aufgabe der vorliegenden Erfindung, eine Schaltung mit Abschalteinrichtung zum Betrieb von Lichtquellen bereit zustellen, die in der Abschalteinrichtung nur Kondensatoren benötigt, deren Werte unter 10 Mikrofarad liegen.

Diese Aufgabe wird durch eine Schaltung gelöst, die zusätzlich zu der oben beschriebenen Schaltung nach dem allgemeinen Stand der Technik in der Abschalteinrichtung eine zweite Transistorstufe mit einem Bipolartransistor in Kollektorschaltung aufweist. Diese ist der ersten Stufe, die in Emitterschaltung ausgeführt ist, nachgeschaltet.

Die Bezeichnung von Transistorstufen richtet sich bekanntermaßen nach der Transistorelektrode, die sowohl dem Eingang der Stufe als auch dem Ausgang der Stufe zugeordnet ist. In Regel liegt diese Elektrode auf Massepotenzial. Die erfindungsgemäße zweite Stufe der Abschalteinrichtung ist in Emitterschaltung; d. h. der Emitter der zweiten Stufe ist mit dem Massepotenzial verbunden.

Die Emitterschaltung wird in der Literatur auch Spannungsfolger bezeichnet. Sie besitzt ein hohe Eingangs- und eine niedrige Ausgangsimpedanz. Da der Ausgang der ersten Stufe bedingt durch die hohe Eingangsimpedanz der zweiten Stufe nur noch geringen Strom liefern muss, kann der Eingang der ersten Stufe ein höheres Impedanzniveau aufweisen. Dadurch kann der Wert von C4 in einer typischen Anwendung um ca. eine Größenordnung niedriger gewählt werden.

Vorteilhaft enthalten die erste und die zweite Stufe Bipolartransistoren unterschiedlichen Typs. Z. B enthält die erste Stufe einen NPN-Transistor und die zweite Stufe einen PNP- Transistor. Damit ist es möglich, die zwei Stufen direkt zu Verbinden.

Der Kollektor der ersten Stufe kann direkt mit der Basis der zweiten Stufe verbunden werden.

Erfindungsgemäß wird die zweite Stufe der Abschalteinrichtung auch verwendet, um Startimpulse beim schwingenden Halbbrücken-Wechselrichter zu unterdrücken. Dazu wird die Basis des Transistors der zweiten Stufe mit dem Ansteuersignal eines elektronischen Schalters des Halbbrücken-Wechselrichters gekoppelt. Vorausgesetzt, die elektronischen Schalter des Halbbrücken-Wechselrichters werden durch ein positives Signal eingeschaltet, sind folgende Kombinationen besonders vorteilhaft: PNP-Transistor in der zweiten Stufe gekoppelt mit dem Ansteuersignal des unteren elektronischen Schalters; NPN-Transistor in der zweiten Stufe gekoppelt mit dem Ansteuersignal des oberen elektronischen Schalters. Bei den angegebenen Kombinationen wird der Start-Kondensator immer dann entladen, wenn der obere elektronische Schalter einschaltet. Dies hat den Vorteil, dass beim Start der Schwingung des Halbbrücken-Wechselrichters durch einen Startpuls auf den unteren elektronischen Schalter der Start-Kondensator nicht entladen wird und damit eine ausreichende Ansteuerung des unteren elektronischen Schalters gewährleistet ist. Entsprechend umgekehrtes gilt für den seltenen Fall, dass der Startimpuls auf den oberen elektronischen Schalter geschaltet ist.

Vorteilhaft ist die Kopplung zwischen dem Ansteuersignal eines elektronischen Schalters und der Basis des Transistors der zweiten Stufe über einen Kondensator. Damit werden Potenzial-Unterschiede der gekoppelten Schaltungspunkte ausgeglichen. Außerdem werden die Schaltflanken des Ansteuersignals ausgewertet, was zu schnellem Schalten der zweiten Stufe führt.

Falls die zweite Stufe Startimpulse wie beschrieben unterdrückt, kann die Diode 11 in Figur 1 entfallen.

### Kurze Beschreibung der Zeichnungen

Im folgenden soll die Erfindung anhand von Ausführungsbeispielen unter Bezugnahme auf Zeichnungen näher erläutert werden. Es zeigen:
- Figur 1: den bereits oben beschriebenen Stand der Technik für eine Schaltung mit Abschalteinrichtung zum Betrieb von Lichtquellen,
- Figur 2: ein Ausführungsbeispiel für eine erfindungsgemäßeSchaltung mit Abschalteinrichtung zum Betrieb von Lichtquellen,
- Figur 3: ein weiteres Ausführungsbeispiel für eine erfindungsgemäßeschaltung mit Abschalteinrichtung zum Betrieb von Lichtquellen mit einer Startimpuls-Unterdrückung,
- Figur 4: ein Ausführungsbeispiel für die Bereitstellung eines Abschaltsignals.

Im folgenden werden Widerstände durch den Buchstaben R, Transistoren durch den Buchstaben T, Dioden durch den Buchstaben D, Knoten durch den Buchstaben N und Kondensatoren durch den Buchstaben C jeweils gefolgt von einer Zahl bezeichnet. Auch werden im folgenden für gleiche und gleichwirkende Elemente der verschiedenen Ausführungsbeispiele durchweg gleiche Bezugszeichen verwendet.

### Bevorzugte Ausführung der Erfindung

In Figur 2 ist ein Ausführungsbeispiel für eine erfindungsgemäße Schaltung mit Abschalteinrichtung zum Betrieb von Lichtquellen dargestellt. Im Vergleich zu Figur 1, die den Stand der Technik darstellt, ist die Abschalteinrichtung um den Widerstand R8 und den Transistor T4 erweitert. Der Kollektor des Transistors T3 ist im Gegensatz zum Stand der Technik nicht direkt, sondern über R8 mit dem Startkondensator C3 verbunden. Der Kollektor von T4 ist mit dem Massepotenzial verbunden. T4 wird somit in Kollektor-Schaltung betrieben. Der Emitter von T4 ist mit dem Startkondensator C3 und die Basis von T4 mit dem Kollektor von T3 verbunden.

T3 bildet die erste Stufe in Emitterschaltung, T4 die zweite Stufe in Kollektorschaltung. Durch die erfindungsgemäße zweite Stufe ist der von der ersten Stufe benötigte Kollektorstrom reduziert. Damit ist auch der Basisstrom der ersten Stufe reduziert, wodurch die Basisbeschaltung von T3 ein höheres Impedanzniveau aufweisen kann. Dadurch sind für den Kondensator C4 Werte auch unter 1 Mikrofarad möglich.

Das Abschaltsignal wird in die Abschalteinrichtung bei einem Eingang E eingespeist. Dieser Eingang ist auch in Figur 1 gekennzeichnet und entspricht dort auch dem Eingang der Abschalteinrichtung nachdem Stand der Technik. Der Rest der Schaltung aus Figur 1 ist in Figur 2 nicht mehr dargestellt, da keine weiteren unterschiede bestehen.

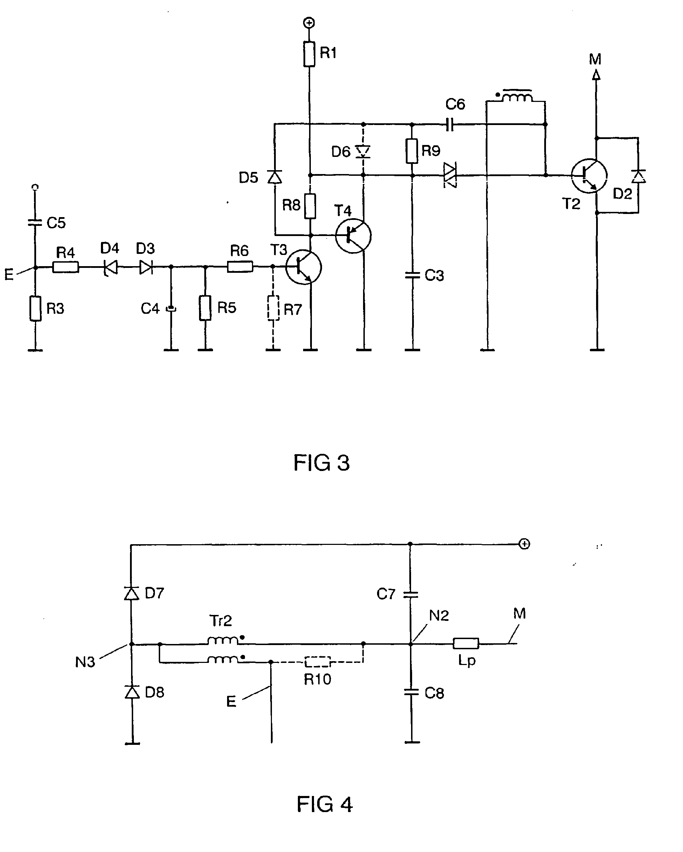

In Figur 3 ist die Abschalteinrichtung aus Figur 2 um eine Startimpulsunterdrückung erweitert. Die Basis von T4 ist mit dem Ansteuersignal des unteren elektronischen Schalters T2 des Halbbrücken-Wechselrichters über die Serienschaltung eines Kondensators C6 und einer Diode D5 verbunden. An der Verbindungsstelle von D5 und C6 entsteht der Knoten N1. N1 ist über eine Parallelschaltung einer Diode D6 und eines Widerstands R9 mit dem Emitter von T4 verbunden.

Während der Halbbrücken-Wechselrichter schwingt, liegt an der Basis des unteren elektronischen Schalters T2 eine Wechselspannung an. Wenn T2 abschaltet weist das Ansteuersignal von T2 eine fallende Flanke auf und über C6 und D5 wird T4 angesteuert. Damit wird der Start-Kondensator C3 entladen und ein Startimpuls unterdrückt. Vorteilhaft ist das entladen von C3 wenn T2 abschaltet bzw. T1 einschaltet. Damit wird ein Anschwingen des Halbbrücken-Wechselrichters nicht behindert.

D6 und R9 stellen den Ladungsausgleich von C6 sicher. Ist R9 niederohmig genug, um alleine für diesen Ladungsausgleich zu sorgen, so kann D6 entfallen.

Zusätzlich ist in Figur 3 in Serie zur Diode D3 eine Zenerdiode D4 geschaltet. Sie ermöglicht, dass die Abschalteinrichtung erst über einer vorgegebenen Spannung am Eingang E angesteuert wird

In Figur 4 ist ein Schaltungsdetail ausgeführt, das darstellt, wie ein Abschaltsignal erzeugt werden kann. Bei einem Laststrom, der einem Normalbetrieb der Schaltung entspricht, werden die Koppel-Kondensatoren C7, C8 nur soweit ge- und entladen, dass das sich das Potenzial am Knoten N2 zwischen der Versorgungsspannung + und dem Massepotenzial bewegt. Bei Überlast oder Kurzschluss werden die Koppel-Kondensatoren C7, C8 vollständig entladen bzw. mit einer Spannung aufgeladen, die größer ist als die Versorgungsspannung. In diesem Fall fließt ein Begrenzungs-Strom durch die Begrenzer-Dioden D7, D8. Im Stand der Technik sind die Knoten N2 und N3 direkt verbunden. In Figur 4 ist zwischen N2 und N3 die Primärwicklung eines Messübertragers Tr2 geschaltet. Ein Begrenzungs-Strom kann an einer Sekundärwicklung des Messübertragers Tr2 abgenommen werden und dem Eingang E der Abschalteinrichtung zugeführt werden. Über einen Widerstand R10 kann der Sekundärwicklung ein Pfad für einen Entmagnetisierungs-Strom bereit gestellt werden.

Die in Figur 4 dargestellte Möglichkeit der Erzeugung eines Abschaltsignals hat den Vorteil, dass sie scharf zwischen einem normalen Strom und einem überhöhten Strom unterscheiden kann und ein potenzialfreies Abschaltsignal liefern kann.

## Patentansprüche

1. Schaltung mit Abschalteinrichtung zum Betrieb von Lichtquellen (Lp) mit folgenden Merkmalen:
• ein selbstschwingender Halbbrücken-Wechselrichter mit einer Serienschaltung aus einem oberen und einem unteren elektronischen Schalter (T1, T2), die in einem Halbbrücken-Mittelpunkt (M) verbunden sind und zwischen eine Versorgungsspannung (+) und ein Massepotenzial geschaltet sind,
• ein Start-Kondensator (C3), der über ein Triggerelement (DIAC) mit einer Steuerelektrode des unteren elektronischen Schalters (T2) verbunden ist,
• eine Abschalteinrichtung mit einem Eingang (E) und einem Ausgang, die so ausgelegt und geschaltet ist, dass sie den Start-Kondensator (C3) entlädt, falls am Eingang (E) ein Abschaltsignal anliegt,
• die Abschalteinrichtung umfasst zwei hintereinander geschaltete Transistorstufen (T3, T4) mit Bipolartransistoren, wobei eine erste Stufe (T3) in Emitterschaltung und eine zweite Stufe (T4) in Kollektorschaltung ausgeführt ist,
• die erste Stufe enthält einen NPN-Transistor (T3) und die zweite Stufe einen PNP-Transistor (T4), wobei der Emitter des PNP-Transistors mit dem Start-Kondensator (C3) verbunden ist,
**dadurch gekennzeichnet, dass**
die Basis des Transistors der zweiten Stufe (T4) mit dem Ansteuersignal des unteren elektronischen Schalters (T2) des Halbbrücken-Wechselrichters derart gekoppelt ist, dass wenn der untere elektronische Schalter (T2) abschaltet, das Ansteuersignal dieses unteren elektronischen Schalters (T2) eine fallende Flanke aufweist, die den Transistor der zweiten Stufe (T4) zum Ansteuern bringen soll.

2. Schaltung mit Abschalteinrichtung zum Betrieb von Lichtquellen (Lp) gemäß Anspruch 1,
**gekennzeichnet, durch** folgende Merkmale:
• die Basis des Transistors der zweiten Stufe (T4) ist mit der Anode einer fünften Diode (D5) verbunden,
• die Kathode der fünften Diode (D5) ist mit einem ersten Knoten (N1) verbunden,
• der Steueranschluss des unteren elektronischen Schalters (T2) ist über einen sechsten Kondensator (C6) mit dem ersten Knoten (N1) verbunden,
• der Emitter des Transistors der zweiten Stufe (T4) ist über einen neunten Widerstand (R9) mit dem ersten Knoten (N1) verbunden.

3. Schaltung mit Abschalteinrichtung zum Betrieb von Lichtquellen (Lp) gemäß Anspruch 1 oder 2,
**gekennzeichnet, durch** folgende Merkmale:
• zwischen die Versorgungsspannung (+) und das Massepotenzial ist die Serienschaltung eines ersten und eines zweiten Koppel-Kondensators (C7, C8) geschaltet, wobei die Koppel-Kondensatoren (C7, C8) an einem zweiten Knoten (N2) verbunden sind,
• zwischen die Versorgungsspannung (+) und das Massepotenzial ist die Serienschaltung einer ersten und einer zweiten Begrenzer-Diode (D7, D8) geschaltet, wobei die Begrenzer-Dioden (D7, D8) an einem dritten Knoten (N3) verbunden sind,
• der zweite und der dritte Knoten (N2, N3) sind über eine Strommesseinrichtung (Tr2) verbunden, die an die Abschalteinrichtung ein Abschaltsignal abgibt und der Strom, der vom zweiten Knoten (N2) zum dritten Knoten (N3) fließt ein Maß für den Wert des Abschaltsignals ist.

4. Schaltung mit Abschalteinrichtung zum Betrieb von Lichtquellen gemäß Anspruch 3,
**dadurch gekennzeichnet, dass** die Strommesseinrichtung (Tr2) einen Messübertrager (Tr2) mit einer Primär- und einer Sekundärwicklung umfasst, wobei die Primärwicklung den zweiten und den dritten Knoten (N2, N3) verbindet und die Sekundärwicklung mit dem Eingang (E) der Abschalteinrichtung verbunden ist.

## Claims

1. Circuit with a switch-off device for the operation of light sources (Lp), having the following features:
• a self-commutated half-bridge inverter having a series circuit of an upper electronic switch and a lower electronic switch (T1, T2), which are joined at a half-bridge midpoint (M) and are connected between a supply voltage (+) and a ground potential,
• a start capacitor (C3) which is joined via a trigger element (DIAC) to a control electrode of the lower electronic switch (T2), and
• a switch-off device having an input (E) and an output, which are configured and connected so that they discharge the start capacitor (C3) if a switch-off signal is applied to the input (E),
• the switch-off device comprises two successively connected transistor stages (T3, T4) with bipolar transistors, a first stage (T3) being configured as an emitter circuit and a second stage (T4) being configured a collector circuit,
• the first stage contains an NPN transistor (T3) and the second stage contains a PNP transistor (T4), the emitter of the PNP transistor being joined to the start capacitor (C3),
• **characterized in that** the base of the transistor of the second stage (T4) is coupled with the drive signal of the lower electronic switch (T2) of the half-bridge inverter, in such a way that when the lower electronic switch (T2) switches off, the drive signal of this lower electronic switch (T2) has a falling edge, which should cause the transistor of the second stage (T4) to be driven.

2. Circuit with a switch-off device for the operation of light sources (Lp) according to Claim 1,
**characterized by** the following features:
• the base of the transistor of the second stage (T4) is joined to the anode of a fifth diode (D5),
• the cathode of the fifth diode (D5) is joined to a first node (N1),
• the control terminal of the lower electronic switch (T2) is joined via a sixth capacitor (C6) to the first node (N1),
• the emitter of the transistor of the second stage (T4) is joined via a ninth resistor (R9) to the first node (N1).

3. Circuit with a switch-off device for the operation of light sources (Lp) according to Claim 1 or 2,
**characterized by** the following features:
• the series circuit of a first coupling capacitor and a second coupling capacitor (C7, C8) is connected between the supply voltage (+) and the ground potential, the coupling capacitors (C7, C8) being joined to a second node (N2),
• the series circuit of a first limiter diode and a second limiter diode (D7, D8) is connected between the supply voltage (+) and the ground potential, the limiter diodes (D7, D8) being joined to a third node (N3),
• the second and third nodes (N2, N3) are joined via a current measuring device (Tr2) which sends a switch-off signal to the switch-off device, and the current which flows from the second node (N2) to the third node (N3) is a measure of the value of the switch-off signal.

4. Circuit with a switch-off device for the operation of light sources according to Claim 3,
**characterized in that** the current measuring device (Tr2) comprises a measuring transformer (Tr2) with a primary winding and a secondary winding, the primary winding joining together the second and third nodes (N2, N3) and the secondary winding being joined to the input (E) of the switch-off device.

## Revendications

1. Circuit avec dispositif de coupure pour alimenter des sources lumineuses (Lp), avec les caractéristiques suivantes :
• un onduleur à demi-pont auto-oscillant avec un montage en série composé d'un interrupteur électronique supérieur et d'un interrupteur électronique inférieur (T1, T2) qui sont reliés en un point central de demi-pont (M) et qui sont branchés entre une tension d'alimentation (+) et un potentiel de masse,
• un condensateur de démarrage (C3) qui est relié par l'intermédiaire d'un élément de déclenchement (DIAC) à une électrode de commande de l'interrupteur électronique inférieur (T2),
• un dispositif de coupure avec une entrée (E) et avec une sortie qui est conçu et branché de telle sorte qu'il décharge le condensateur de démarrage (C3) si un signal de coupure se trouve à l'entrée (E),
• le dispositif de coupure comprend deux étages de transistors (T3, T4) branchés l'un derrière l'autre et comportant des transistors bipolaires, un premier étage (T3) étant réalisé en émetteur commun et un deuxième étage (T4) étant réalisé en collecteur commun,
• le premier étage contient un transistor NPN (T3) et le deuxième étage contient un transistor PNP (T4), l'émetteur du transistor PNP étant relié au condensateur de démarrage (C3),
**caractérisé par le fait que**
la base du transistor du deuxième étage (T4) est couplée de telle sorte au signal de commande de l'interrupteur électronique inférieur (T2) de l'onduleur à demi-pont que, si l'interrupteur électronique inférieur (T2) coupe, le signal de commande de cet interrupteur électronique inférieur (T2) comporte un front descendant qui doit amener le transistor du deuxième étage (T4) à commander.

2. Circuit avec dispositif de coupure pour alimenter des sources lumineuses (Lp) selon la revendication 1,
**caractérisé par** les caractéristiques suivantes :
• la base du transistor du deuxième étage (T4) est reliée à l'anode d'une cinquième diode (D5),
• la cathode de la cinquième diode (D5) est reliée à un premier noeud (N1),
• la borne de commande de l'interrupteur électronique inférieur (T2) est reliée par l'intermédiaire d'un sixième condensateur (C6) au premier noeud (N1),
• l'émetteur du transistor du deuxième étage (T4) est relié par l'intermédiaire d'une neuvième résistance (R9) au premier noeud (N1).

3. Circuit avec dispositif de coupure pour alimenter des sources lumineuses (Lp) selon la revendication 1 ou 2,
**caractérisé par** les caractéristiques suivantes :
• le montage en série d'un premier et d'un deuxième condensateur de couplage (C7, C8) est branché entre la tension d'alimentation (+) et le potentiel de masse, les condensateurs de couplage (C7, C8) étant reliés à un deuxième noeud (N2),
• le montage en série d'une première et d'une deuxième diode de limitation (D7, D8) est branché entre la tension d'alimentation (+) et le potentiel de masse, les diodes de limitation (D7, D8) étant reliées à un troisième noeud (N3),
• le deuxième et le troisième noeud (N2, N3) sont reliés par l'intermédiaire d'un dispositif de mesure de courant (Tr2) qui fournit un signal de coupure au dispositif de coupure et le courant qui passe du deuxième noeud (N2) au troisième noeud (N3) est une mesure pour la valeur du signal de coupure.

4. Circuit avec dispositif de coupure pour alimenter des sources lumineuses selon la revendication 3,
**caractérisé par le fait que** le dispositif de mesure de courant (Tr2) comprend un transformateur de mesure (Tr2) avec un enroulement primaire et avec un enroulement secondaire, l'enroulement primaire reliant le deuxième et le troisième noeud (N2, N3) et l'enroulement secondaire étant relié à l'entrée (E) du dispositif de coupure.
